Europäisches Patentamt

European Patent Office

Office européen des brevets

(11) Publication number: **0 504 779 A2**

# EUROPEAN PATENT APPLICATION

(21) Application number: **92104524.1**

(22) Date of filing: **16.03.92**

(51) Int. Cl.5: **G11B 20/18**

(30) Priority: **17.03.91 JP 76861/91**

(43) Date of publication of application:
**23.09.92 Bulletin 92/39**

(84) Designated Contracting States:
**DE FR GB**

(71) Applicant: **SONY CORPORATION**
**7-35, Kitashinagawa 6-chome Shinagawa-ku**
**Tokyo(JP)**

(72) Inventor: **Watanabe, Takashi**
**c/o Sony Corporation, 7-35 Kitashinagawa**
**6-chome**
**Shinagawa-ku, Tokyo(JP)**
Inventor: **Ishida, Yoshinori**
**c/o Sony Corporation, 7-35 Kitashinagawa**
**6-chome**
**Shinagawa-ku, Tokyo(JP)**

(74) Representative: **Melzer, Wolfgang, Dipl.-Ing. et**
**al**
**Mitscherlich und Partner, Steinsdorfstrasse**
**10**
**W-8000 München 22(DE)**

(54) **A data recording and/or reproducing apparatus.**

(57) The present invention relates to a magnetic recording/reproducing apparatus such as, e.g., a computer external storage device and the like. A plurality of recording tracks (TR) are formed on a magnetic tape (1) on one control unit for control signal. Input data (D4) and error detecting/correcting code (C3) are interleave-processed (33) and recorded between the plurality of recording tracks (TR). A bit error rate can be remarkably improved and simultaneously the input data can be recorded with a high density by effecting using the magnetic tape (1).

FIG. 10

## BACKGROUND OF THE INVENTION

This invention relates to a data recording and/or reproducing device and is applicable to, e.g., a computer external storage device, etc.

Hitherto, in this type of magnetic recording device, there has been proposed a so-called ID-1 formatted data recorder (ANSI x3.175-1990 19mm Type ID-1 Recorded Instrumentation) wherein recording tracks are formed sequentially obliquely on a magnetic tape, and desired data are recorded with a high density and reproduced.

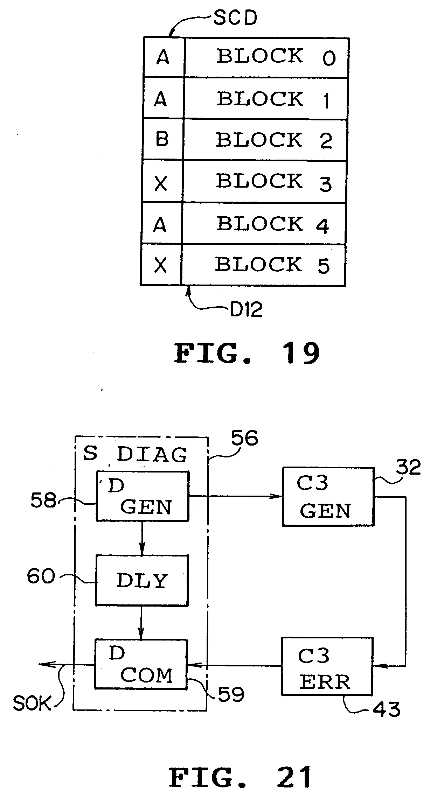

To be specific, as illustrated in Fig. 21, in this type of data recorder, a magnetic tape 1 is wound on a rotary drum which rotates at a predetermined speed. The magnetic tape 1 is made to run at a predetermined velocity, thereby forming recording tracks TR (TR1, TR2, TR3, TR4, TR1, TR2, ...) sequentially obliquely with a magnetic head mounted on the rotary drum. The desired data is then recorded in the recording track TR1.

Further, at this time, the data recorder forms recording tracks TA, CTL, TC extending in the longitudinal direction at upper and lower ends of the magnetic tape 1. A track set ID of the recording tracks TR is recorded in the recording track CTL.

The track set ID herein defined as absolute position information starting from the head of the magnetic tape 1 is interposed between predetermined synchronous signals and recorded at a 4-track cycle with respect to the recording tracks TR.

Further, the recording tracks TA, TC are capable of recording user management data and the like. The data which are recorded with a high density in the recording tracks are thereby easily searchable by effecting reproduction from the recording tracks TA, CTL, TC.

Further, in the data recorder, when recording the data in the recording track TR, the data is marked with a error detecting/correcting parity code consisting of a so-called product code and then recorded. The desired data can be thereby surely recorded and reproduced.

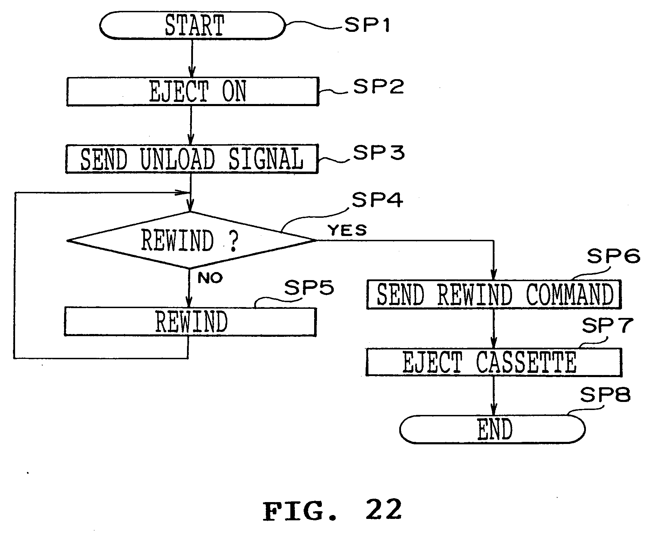

More specifically, as illustrated in Fig. 22, the data recorder takes in data DATA on a predetermined unit ( = 36,108 [BITE]) and thereafter divides the data DATA into 306 blocks. A read-Solomon error detecting/correcting code (i.e., consisting of a C2 code)is added per block.

The block is further divided into first and second fields FIELD0, FIELD1. Thereafter, a Read-Solomon error detecting/correcting code (viz., consisting of a C1 code) is so added as to be orthogonal to the C2 code for each of the fields FIELD0, FIELD1.

With this arrangement, in the data recorder, the reproduced data is error-corrected by use of the C1 and C2 codes during reproducing, thereby improving a bit error rate.

Besides, in the data recorder, when recording the data DATA which are thus marked with the C1 and C2 codes on the magnetic tape 1, the data are interleave-processed for every recording track TR. With this process, even if a drop-out or the like takes place, the data DATA can be surely reproduced.

Namely, in the data recorder, the data DATA are recorded by replacing a data DATA input order indicated by arrows such as a1, a2, ..., an-1, an, an + 1, an + 2, ..., ax-1, an with an input order indicated by arrows such as b1, b2, ..., bn-1, bn. The data DATA are thereby interleave-processed.

Further, at this moment, in the data recorder, a synchronous signal SYNC and a sync block data ID are added on a predetermined unit (hereinafter referred to as a sync block). Simultaneously, preamble and postamble data are added on the whole, thus recording the data DATA.

With this operation, during the reproducing process, in the magnetic recording device, the synchronous signal SYNC, the sync block data ID and the data DATA are reproduced on the basis of track sync data contained in the preamble. The data are deinterleave-processed on the basis of the synchronous signal SYNC and the sync block data ID.

Further, even if the drop-out or the like happens, it is possible to effectively avoid a one-spot concentration of errors exceeding an error correction capability of C1 and C2 codes by effecting the interleave process.

In the ID-1 formatted data recorder for recording/reproducing the desired data in this manner, however, a bit error rate of approximately $10^{10}$ enough for utilization as a data recording/reproducing device mainly for measurement is assured.

In this bit error rate can be improved to approximately $10^{15}$, it can be considered that extremely important data can be stored by an application to a computer system magnetic tape device employed, e.g., a bank.

Hence, the usability of this type of data recorder is improved correspondingly, thus expanding an application field.

## SUMMARY OF THE INVENTION

In view of the foregoing, an object of this invention is to provide a data recording and/or reproducing device which is capable of improving a bit error rate more outstandingly than in the prior arts.

The foregoing object and other objects of the invention have been achieved by the provision of a data recording and/or reproducing devices 12, 13 for recording desired input data WR by forming recording track TR obliquely in the longitudinal direction of a magnetic tape 1 on the basis of control signals outputted from a predetermined control unit 11, there is provided a magnetic recording device characterized in that: error detecting/correcting codes C3 are added to the input data D4 inputted sequentially on a predetermined unit; a plurality of recording tracks TR are formed on the magnetic tape 1 on one control unit for the control signals in response to the control signals; and the input data D4 and the error detecting/correcting codes C3 are interleave-processed between the plurality of recording tracks TR corresponding to one control unit, so that the interleave-processed input data D4 and error detecting/correcting codes C3 are recorded in the plurality of recording tracks TR.

The input data D4 and the error detecting/correcting codes C3 are interleave-processed between the plurality of recording tracks TR corresponding to one control unit. The interleave-processed input data D4 and error detecting/correcting codes C3 are recorded in the plurality of recording tracks TR. The input data D4 can be thereby recorded with a high density by effectively using the magnetic tape 1.

Further, it has been achieved by the provision of a data recording apparatus for recording predetermined input data on recording tracks by forming the recording tracks obliquely on a tape recording medium comprising: converting means for converting input data sequentially input into input data of a plurality of channels having a predetermined bit length; a plurality of coders for adding a error detection/correction code to said input data at every plural channels; a plurality of interleave processing means for interleave processing said input data and said error detection/correction code at every said plural channels; data conversion means for converting said input data and said error detection/correction code of a plurality channels interleave processed by means of said plural interleave processing means record data of one channel by sequentially outputting the output data of said plural interleave processing means; tape recording means for recording said record data on said tape recording medium.

The input data D0 which is sequentially inputted is converted into input data D4A, D4B, D4C, D4D of a plurality of channels having a predetermined bit length, and is interleaved processed after to be added an error detection/correction code C3 at every plural channels. The data as adding processed is converted into record data D6 of one channel so as to thereby be able to reduce a bit rate by means of a simple construction.

Furthermore, it has been achieved by the provision of a data recording apparatus for recording predetermined input data on recording tracks by forming recording tracks obliquely on a tape recording medium comprising: a coder for adding a error detection/correction code to said input data; and error detection/correction means for executing error detection/correction processing of said input data on the basis of said error detection/correction code: wherein in self diagnosing mode, predetermined test data is supplied to said coder instead of said input data, and a test result is obtained regarding to an operation of said coder and/or said error detection/correction means.

Predetermined testing data TEST is supplied to encoder 32 instead of input data D4. The result of the testing with regard to the operation of the encoder 32 and/or the error detection/correction means 43 is obtained on the basis of the error detection result OK of the error detection/correction means 43. Thereby the self diagnosis is executed by means of a simple construction.

Furthermore, it has been achieved by the provision, of a data recording apparatus for recording predetermined input data on recording tracks by forming recording tracks obliquely on a tape recording medium comprising: recording means for recording input data with adding identification data representative of a property of said input data at predetermined unit on said tape recording medium; reproducing means for reproducing said input data and identification data recorded said tape recording medium and outputting reproduction data; memory means for sequentially storing said reproduction data, selecting the region storaged said reproduction data on the basis of said identification data of the storaged reproduction data, and storaging said reproduction data subsequently inputted to said selected region, thereby re-writing unnecessary reproduction data within said reproduction data storaged with subsequent input reproduction data so as to storage only said reproduction data to be added predetermined identification data.

The reproduction data are sequentially storaged and the unnecessary data within the reproduction data is re-written by subsequent inputted reproduction data on the basis of the identification data D12. Thereby only the reproduction data D1 added the desired identification are storaged to be able to storage only the desired reproduction data D12 by means of a simply construction.

Furthermore, it has been achieved by the provision of a data recording apparatus for recording predetermined input data on recording tracks by forming recording tracks obliquely on a tape recording medium comprising: preprocessing means for interleave processing input data to be sequentially inputted with using first format, and them outputting said input data as interleave processed with adding identification data; recording means for adding error detection/correction code at predetermined unit to said output data of said preprocessing means, interleave processing said data as adding processed with using second format, and then sequentially recording said data as interleave processed; reproducing means for obtaining reproduction data from said tape recording medium, deinterleave processing said reproduction data with using second format, and outputting said data as deinterleave processes with error correction processing; and after-processing means for detecting said identification data from output data said reproduction means, deinterleave processing output data of said reproduction means, and outputting said data as deinterleaved.

The identification data DFT are detected from output data PB of the reproducing means 13, and are deinterleaved with first format on the basis of identification data DFT as detected. Thereby the data as deinterleaved are outputted to be able to reproduced the tape recording medium recorded with various formats only with securing compatibility.

Furthermore, it has been achieved by the provision of a data recording and/or reproducing apparatus in which a tape recording medium charged in a predetermined tape cassette is wound on a drum, recording tracks are sequentially formed obliquely on said tape recording medium, and a predetermined input data are recorded on said recording track and/or reproduced said input data as recorded on said recording track, wherein: a region other than a predetermined region of the head portion and the tail portion of the tape recording medium is assigned as a recording region for recording said input data; and when said recording or reproducing operation is ended, said tape recording medium is run to said region of said head portion or said tail portion, and then said tape cassette is ejected after unloading operation.

The region AREC other than a predetermined region of the head portion and the tail portion of the tape recording medium is assigned a recording region for input data WR. When a recording or reproducing operation is ended, the tape recording medium are run to the predetermined region of the head portion or the tail portion, and then the cassette is ejected after the tape recording medium is unloaded. Thereby the load to the recording region WR of the tape recording medium 1 can be reduced so as to be able to more improve a bit error rate compared with prior arts.

The nature, principle and utility of the invention will become more apparent from the following detailed description when read in conjunction with the accompanying drawings in which like parts are designated by like reference numerals or characters.

## BRIEF DESCRIPTION OF THE DRAWINGS

In the accompanying drawings:
Fig. 1 is a schematic diagram of assistance in explaining a D-1 format;
Fig. 2 is a schematic diagram of assistance in explaining the interleave process thereof;
Fig. 3 is a block diagram illustrating a computer system in one embodiment of the present invention;
Fig. 4A and 4B are schematic diagrams illustrating recording areas on a magnetic tape;
Fig. 5A and 5B are schematic diagrams depicting a recording format on the same magnetic tape;
Fig. 6 is a schematic diagram of assistance in explaining an interleave process between recording tracks;
Fig. 7 is a schematic diagram showing a track format on the magnetic tape;
Fig. 8 is a block diagram illustrating a record format control part;
Fig. 9 is a block diagram showing a reproducing format control part;
Fig. 10 is a block diagram illustrating a data recorder control device;
Fig. 11 is a schematic diagram of assistance in explaining a generation process of a C3-code;
Fig. 12 is a schematic diagram of assistance in explaining the interleave process;
Fig. 13 is a schematic diagram of assistance in explaining a case of effecting the interleave process on a 8-track unit;
Fig. 14 is a schematic diagram of assistance in explaining a case of effecting the interleave process on a 4-track unit;
Fig. 15 is a block diagram showing an interleave memory circuit;
Fig. 16A to 16E are schematic diagrams of assistance in explaining a parallel process of the interleave process;
Figs. 17A to 17D are schematic diagrams of assistance in explaining the operation of each interleave memory;
Figs. 18A to 18E are schematic diagrams of assistance in explaining interleave-processed data;
Fig. 19 is a schematic diagram of assistance in explaining the operation of a buffer memory;
Fig. 20 is a schematic diagram illustrating a configuration of test data;
Fig. 21 is a block diagram illustrating a self-diagnosis circuit; and
Fig. 22 is a flowchart of assistance in explaining an eject process.

## DETAILED DESCRIPTION OF THE INVENTION

Preferred embodiments of this invention will be described with reference to the accompanying drawings:

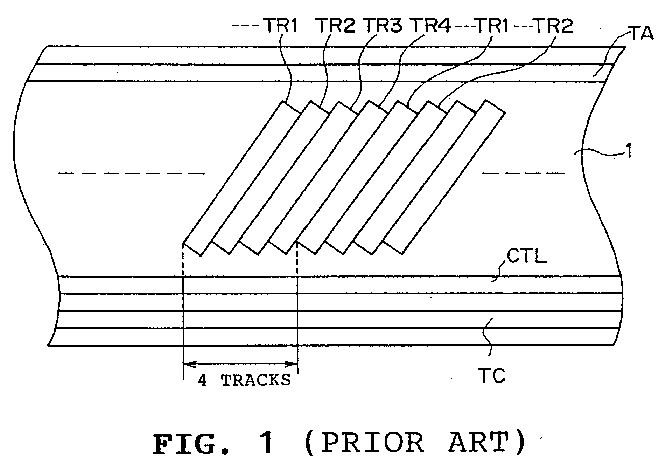

Fig. 1 schematically illustrates a construction of a computer system, designated generally at 10, to which the present invention is applied. Write data WR transmitted together with a write request from a host computer 11 is supplied to an ID-1 formatted data recorder 13 as record data REC via a data recorder control device 12, and the write data WR is thereby written to recording tracks on a magnetic tape.

Reproduction from the magnetic tape of the data recorder 13 is performed in accordance with a read request inputted from the host computer 11. Reproduced data PB obtained as a result of this is inputted as read data RD to the host computer 11 via the data recorder control device 12.

This data recorder control device 12 is composed of a host interface control unit 14 and a format control unit 15. The host interface control unit 14 controls a channel interface between the host computer 11 and the unit itself. The format control unit 15 formats the data transferred to and received from the data recorder 13 by use of a memory 16.

Control information between the host interface control unit 14 and the format control unit 15 is transferred and received referring to a control table 17.

With this arrangement, the computer system 10 incorporates the data recorder control device 12, and hence the data recorder 13 is usable as an external storage unit of the host computer 11 with the aid of the same interface with a conventional magnetic tape device on the side of the host computer 11.

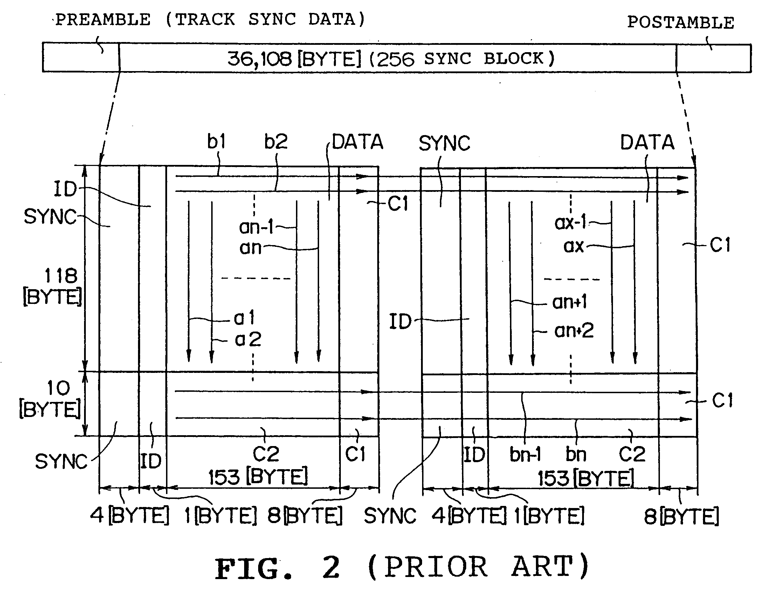

In the computer system 10 provided herein, as illustrated in Fig. 2, a tape central part having a relatively smaller degree of damage of the tape itself when viewed in the longitudinal direction is employed as a recording area AREC on the magnetic tape 1 charged in the data recorder 13. A bit error rate is thereby improved.

Namely, as shown in Fig. 2A, a logical top end LBOT is set in a position which is, e.g., 10 [m] backwards from a physical top end PBOT of the magnetic tape 1. At the same time, a logical terminating end LEOT is set in a position which is, e.g., 15 [m] forwards from a physical terminating end PEOT of the magnetic tape 1. An area from the logical top end LBOT to the logical terminating end LEOT is used as a recording area AREC.

In this recording area AREC, as illustrated in Fig. 2B, an area up to a position which is, e.g., 10 [m] backwards from the logical top end LBOT is employed as a directory information track area DITA.

Subsequent to this directory information track area DITA, an area up to a terminating neighborhood NEOT positioned, e.g., 15 [m] forwards from the logical terminating end LEOT is used as a user recorder track area UDA, with a non-recording area NRA of a predetermined length being interposed therebetween. Further, an area extending over the terminating end neighborhood NEOT to the logical terminating end LEOT is used as a volume end information area VEOVA.

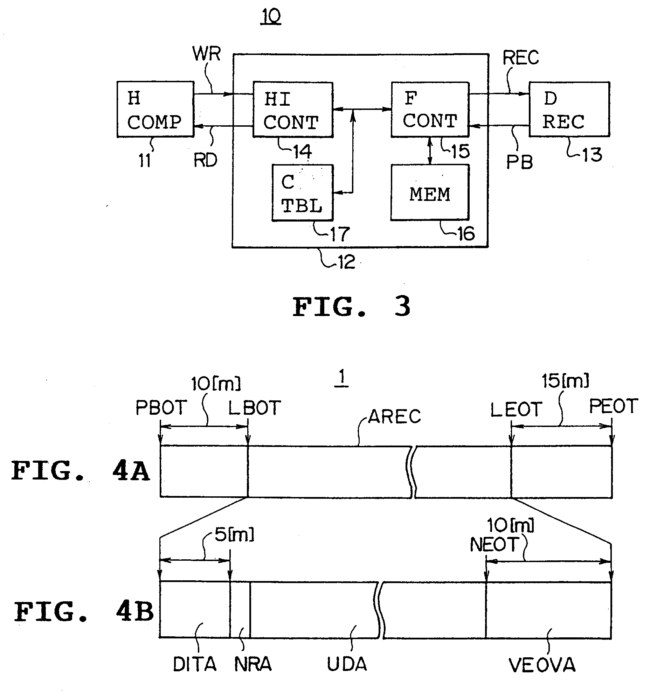

In the computer system 10 provided herein, a user data area of 36,108 [BYTE] of one recording track prescribed by an ID-1 format is formatted as illustrated in Fig. 3. Simultaneously, the formatted data is interleaved on a 4-track unit, thereby improving an bit error rate.

More specifically, in the computer system 10, as shown in Fig. 3A, the write data WR from the host ;computer 11 is recorded as record data DATA of 32,768 [BYTE] composed of, e.g., 1 block for one recording track, wherein each set consists of four tracks.

On one recording track at this time, with respect to the record data DATA which does not yet reach 32,768 [BYTE], 32,768 [BYTE] are attained on the whole by adding first supplement data PD1. Subcode data SCD of 320 [BYTE] is prepared for storing attached information to one recording track TR.

Added, as illustrated in Fig. 3A, to the data recorder control device 12 in addition to this is a 8-[BYTE] Reed-Solomon) error detecting correction code (hereinafter referred to as C3-code C3 corresponding to C1, C2 codes in the ID-1 FORMAT) by use of a predetermined generator polynomial for every 94 [BYTE] of the first supplement data PD1 or the recording data DAT or the subcode data SCD. An error correction is thereby executable more firmly. This leads to a further improvement of the bit error rate.

As depicted in Fig. 4, with respect to the subcode data SCD, the recording data DATA, the first supplement data PD1 and the C3-code C3 which have been thus formatted on 1-recording-track unit, the data for 4 recording tracks TR1, TR2, TR3, TR4 are interleave-processed over the tracks by a predetermined method. This leads to a still further improvement of the bit rate.

Second supplement data PD2 of 204 [BYTE] is added to each of heads of the data for every one recording track which have thus been interleaved with respect to the four recording tracks TR1, TR2, TR3, TR4. A data quantity for one recording track TR thereby reaches 36,108 [BYTE] prescribed in the ID-1 format on the whole.

Besides, the second supplement data PD2 is formatted at the head and can be thereby allocated to an intrusion part of a magnetic head which is high in degree of damages to the recording tracks of the magnetic tape 1 itself and unstable in tracking. A much more improved bit error rate can be thereby obtained with respect to the recording data DATA.

In the case of the computer system 10 provided herein, the appended information of the recording track 1 which is stored in the subcode data SCD is composed of track classification information TRID showing a classification of corresponding recording track TR, a block number BLNO to which the recording track belongs, a file number FLNO to which the recording track belongs, a write retry count RTCT for the recording track TR and a byte count BYCT of the data contained in the recording track.

Recorded in this track classification information TRID is the classification information such as a volume information table VIT, a file information table FIE, an update information table UIT, dummy data track information DMY, user data track information UDT, tape mark track information TM or record end information.

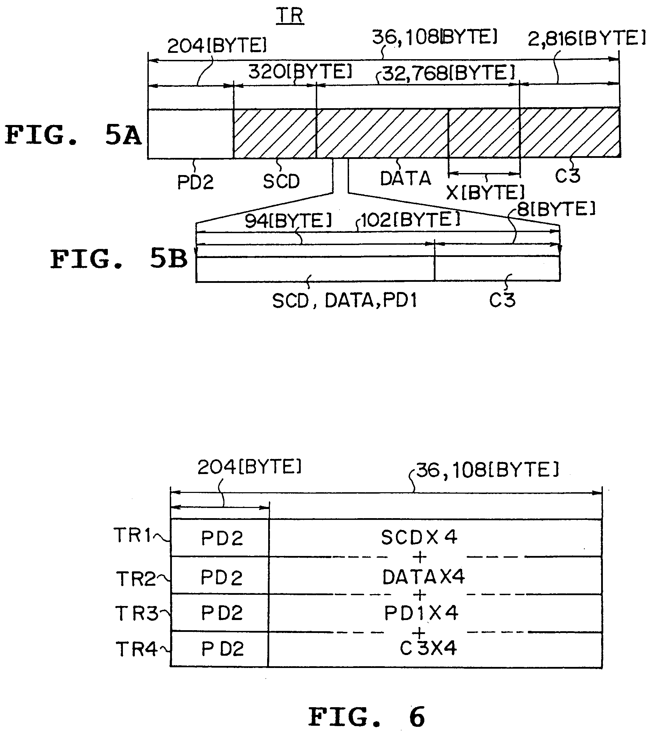

Herein, as actually illustrated in Fig. 5, the track classification information TRID of the recording track TR formed in the directory information track area DITA of the magnetic tape 1 involves the use of the volume information table VIT, the file information table FIT, the update information table UIT or the dummy data track information DMY.

A directory information table DIT for managing a file on the magnetic table on the whole is recorded in this directory information track area DITA. Subsequent to a rise-up area RUA initially occupying 1.5 [m] from the logical top end LBOT of the magnetic tape 1, a recording track consisting of the volume information table VIT undergoes recording based on a track set, i.e., 4 tracks.

Recorded in the recording data DATA of this volume information table VIT are head/final position information of the data block recorded in the user recording track area UDA with the entire magnetic tape 1 serving as one volume, information on a length of the file information table FIT and a block number of the data block when executing a write retry during the recording process.

The file information table FIT is recorded on 256 recording tracks subsequent to the volume information table VIT. Head position information of the file concerned and a block length are recorded in the recording data DATA of this file information table FIT on the file unit recorded in the user recording track area UDA.

Subsequent to the file information table FIT, the dummy data track information DMY is further recorded on a predetermined number of tracks.

The update information table UIT is recorded on the subsequent 4 recording tracks. Information indicating an existence or non-existence of the update is recorded in the recording data DATA of this update information table UIT.

Note that subsequently to the update information table UIT, the dummy data track information DMY is recorded on the recording tracks TR extending 2.5 [m] from the head of the directory information track area DITA, and a remaining 2.5 [m] directory information track area DITA is secured as a marginal area MGA.

Next, after the directory information track area DITA of the magnetic tape 1, the user data track information UDT, the table mark track information TM or the record end information EOR are employed as the track classification information TRID of the recording track TR formed in the user recording track area UDA, with the non-recording area NRA being interposed therebetween.

With respect to the recording tracks TR of the user recording track area UDA, there are effected recording of the user data track information UDT for a plurality of blocks constituting 1 file while being interposed between the recording tracks TR for pieces of the tape mark track information TM on the 4-track unit and also recording of the recording tracks for the record end information EOR subsequent to the final part of the user data track information UDT.

The first supplement data PD1 for 32,768 [BYTE] is recorded in the recording data DATA of the tape mark track information TM and the record end information EOR. The data corresponding to the write data WA inputted form the host computer 11 is recorded in the recording data DATA of the recording tracks TR in the user recording track area UDA.

As described above, in the computer system 10, the directory information track area DITA is provided at the head of the magnetic tape 1. The content of the user recording track are UDA is managed on the file unit. The data recorded in the data recorder 13 is thereby accessible in the same manner with the external recording device when viewed from the host computer 11.

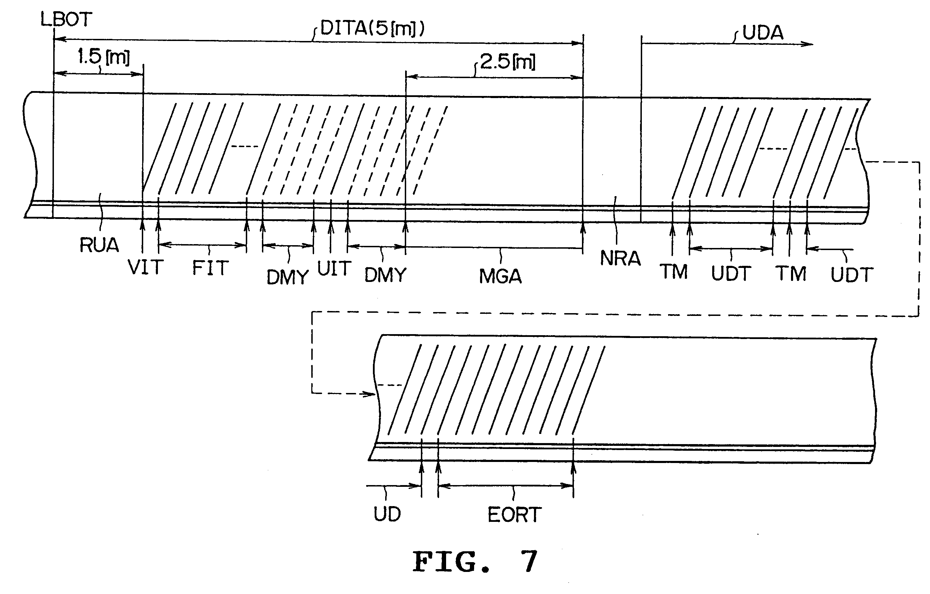

In combination with the memory 16, the format control unit 15 of the data recorder control device 12 in the computer system 10 provided herein is constructed of a record format part 20 and a reproducing format part 40 as illustrated in Figs. 6 and 7.

To be more specific, in the record format control part 20, 32-bit data is inputted as 4-channel 8-bit parallel write data D0 to a memory (i.e., first-in first-out (FIFO)) circuit 21 from the host interface control unit 14. The write data D0 is thereby synchronized with an internal clock CK. This is written as input data D1 to a buffer memory 22 and simultaneously transmitted to a CRC error detection circuit 23.

Note that the write data D0 is processed for every 4 channels within the record format control part 20. The explanation of this record format control part 20, however, will deal with the data for one channel.

The CRC error detection circuit 23 detects an error in the input data D1 by using CRC (cyclic redundancy code). A detected result CRCK thereof is inputted to a system control circuit 24 composed of a computer including CPU.

Note that the system control circuit 24 sends back, upon detecting the error in the input data D1 on the basis of the detected result CRCK of the CRC error detection circuit 23, this error as an error detection signal ER to the host interface control unit 14.

As a result of this, the host interface control unit 14 executes a retransmission of the write data D0 in which the error exists.

The buffer memory 22 effects, as described above in Fig. 3, buffering of the input data D1 for one recording track TR. First buffer data D2 corresponding to the recording data DATA which is obtained as a consequence of this is transmitted to a first multiplexer 25.

In putted in addition to the first buffer data D2 to the first multiplexer 25 are first supplement data PD1 for the tape mark track information TM which is transmitted from a tape mark generation circuit 26, dummy data for the dummy data track information DMY which is transmitted from a dummy data generation circuit 27 and first supplement data PD1 for the recording data DATA which is transmitted from a supplement data generation circuit 28.

In response to a control signal CNT inputted from the system control circuit 24, the first multiplexer 25 thereby adds the first supplement data PD1 to the recording data DATA of the first buffer data D2 to generate second buffer data D3. This buffer data D3 is transmitted to a second multiplexer 29.

In putted in addition to the second buffer data D3 to the second multiplexer 29 are directory information table DIT transmitted form the directory information table memory 30 and subcode data SDC generated in a subcode generation circuit 31 on the basis of a content of the directory information table 30.

As a matter of fact, the directory information table DIT described above referring to Fig. 5 is stored in the directory information table memory 30. The subcode generation circuit 31 generates head/final position information of the data block, length information of the file information table FIT and a block number of the data block in which the write retry is executed during recording in accordance with the content of the directory information table DIT.

The second multiplexer 25 thereby adds the subcode data SDC to the second buffer data D3 in response to the control signal CNT inputted from the system control circuit 24 to form the format discussed with reference to Fig. 3. This format is transmitted as third buffer data D4 to a C3-code generation circuit 32.

The C3-code generation circuit 32, as explained above referring to Fig. 3, generates and adds a 8-[BYTE] C3-code to the third buffer data D4. Recording track data D5 obtained as a result of this is transmitted to an interleave circuit 33.

The interleave circuit 33 sequentially takes in the recording track data D5 for 4 tracks and outputs the data D5 in a predetermined sequence, thus performing an interleave process for 4 tracks shown in Fig. 4. Second recording track data D6 obtained as a consequence of this is transmitted to a third multiplexer 34.

Inputted in addition to the second recording track data D6 to the third multiplexer 34 are the second supplement data PD1 transmitted from the second supplement data generation circuit 35 and synchronous code data transmitted from a synchronous code generation circuit 36.

The third multiplexer 34 thereby adds the second supplement data PD2 and the synchronous code data to the second recording track data D6 in response to the control signal CNT inputted from the system control circuit 24. Third recording track data D7 obtained as a result of this is transmitted to a parallel/serial converting circuit 37.

The parallel/serial converting circuit 37 converts the third 4-channel 8-bit parallel recording track data D7 into 32-bit serial recording data S0. This data S0 is in turn inputted as recording data REC via an output circuit 38 to the data recorder 13.

The recording data REC is thus generated by executing the format processing described with reference to Figs. 3 - 5 with respect to the write data D0 inputted from the host interface control unit 14 in the recording format control part 20 of the format control unit 15. The recording data REC is, as illustrated in Figs. X1 and X2, recorded on the magnetic tape 1 on the basis of the ID-1 format.

In the reproducing format part 40 depicted in Fig. 7 herein, serial reproduced data PB reproduced by the data recorder 13 is inputted to the serial/parallel converting circuit 41 and converted into first 4-channel 8-bit parallel reproduced data D10. This data D10 is inputted to a deinterleave circuit 42.

The deinterleave circuit 42 sequentially takes in the first reproduced data D10 and outputs the data D10 in a predetermined sequence in the same way with the interleave circuit 33 of the record format part 20.

The deinterleave circuit 42 executes a deinterleave process corresponding to the interleave process of the interleave circuit 33. Second reproduced data D11 acquired as a consequence of this is inputted to a C3 error correction circuit 43.

The C3 error correction circuit 43 executes an error correction process of the second reproduced data D11 by use of the C-3 code C3 added by the C-3 code generation circuit 32 of the record format part 20 and transmits third reproduced data D12 obtained as a result of this.

In fact, the data of the third reproduced data D12 which, as illustrated in Fig. 5, corresponds to the user recording data track UDT is inputted to the buffer memory 44, and the data corresponding to the directory information table DIT is inputted to the subcode memory 45 and the directory information table memory 46.

The first supplement data PD1 contained in the third reproduced data D12 is deleted in the buffer memory 44. The resultant data is inputted as fourth reproduced data D13 to a memory circuit 47 and synchronized with an external clock. The resultant data is transmitted to the host interface control unit 14 as readout data D14 which is to be outputted form the reproducing format control part 40.

Note that the system control circuit 24 transmits, if there is an update in the directory information table DIT inputted to the directory information table memory 46, update information UDD of the directory information table DIT together with a data recorder control signal CDIR to the data recorder 13. A content of the directory information table DIT on the magnetic tape 1 is thus updated.

Besides, the system control circuit 24 transmits, to the host interface control unit 14, an answer to a data reproducing request inputted from the host interface control unit 14 as a control signal CHIC together with output data D14.

In the reproducing format control part 20 of the format control unit 15, the reverse format process to the format process described above in Figs. 3 - 5 is thus executed with respect to the reproduced data PB reproduced by the data recorder 13. The readout data D14 is thus generated and transmitted to the host interface control unit 14.

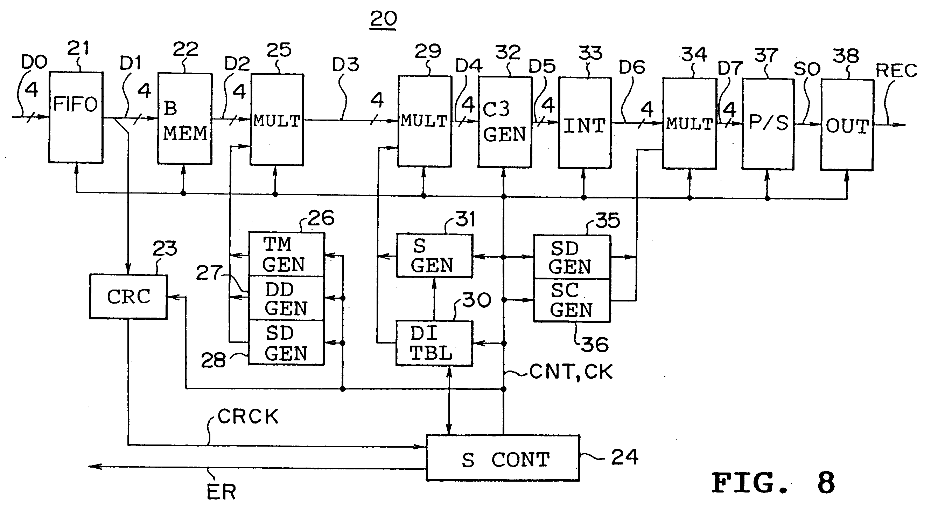

As illustrated in Fig. 8 herein, the buffer memory 22 in the data recorder control device 12 has a 0-[MBYTE] recording capacity and effects buffering of the sequentially inputted write data D0 through the memory circuit 21 (not shown).

Further, the buffer memory 22 adds 320-[BYTE] subcode data SCD to the write data D0 which has undergone buffering in which 32,768 [BYTE] (i.e., consisting of a data quantity for one recording track) are arranged as one unit. The buffer memory 22 thereafter outputs the added data as first buffer data D2.

An adder-circuit-based multiplexer 25 adds, if the first buffer data D2 does not yet reach the data quantity for one recording track, the first supplement data PD1 to generate third buffer data D4 having 33,088 [BYTE] on the whole.

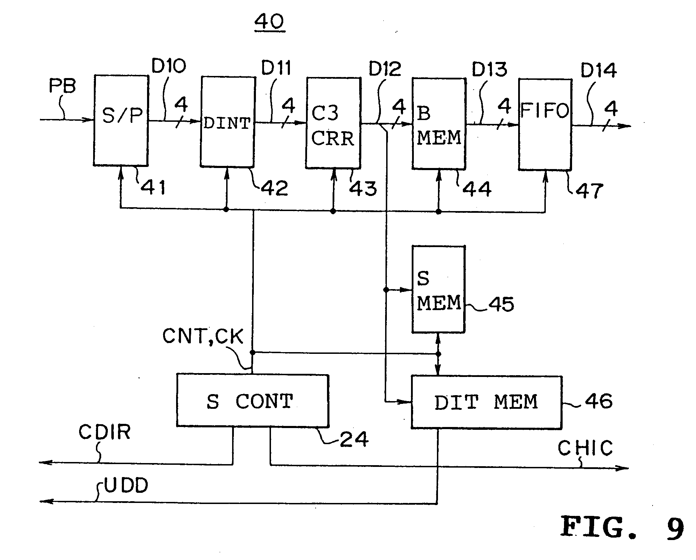

As illustrated in Fig. 9, the C3-code generation circuit 32 divides the third buffer data D4 into 352 data blocks TF0 - TR351. The circuit 32 then generates the C3-codes C3 for each of the data blocks TF0 - TF351 and adds the codes to the respective data blocks TF0 - TF351.

The C3-code generation circuit 32 thereby generates a Reed-Solomon code having a code length N (N = 102 [BYTE]) and a parity number (P = 8 [BYTE]) and thereafter outputs it as recording track data D5.

The interleave circuit 33 is composed of an interleave memory circuit 33A and an address generation circuit 33B for generating write/read addresses of the interleave memory circuit 33A.

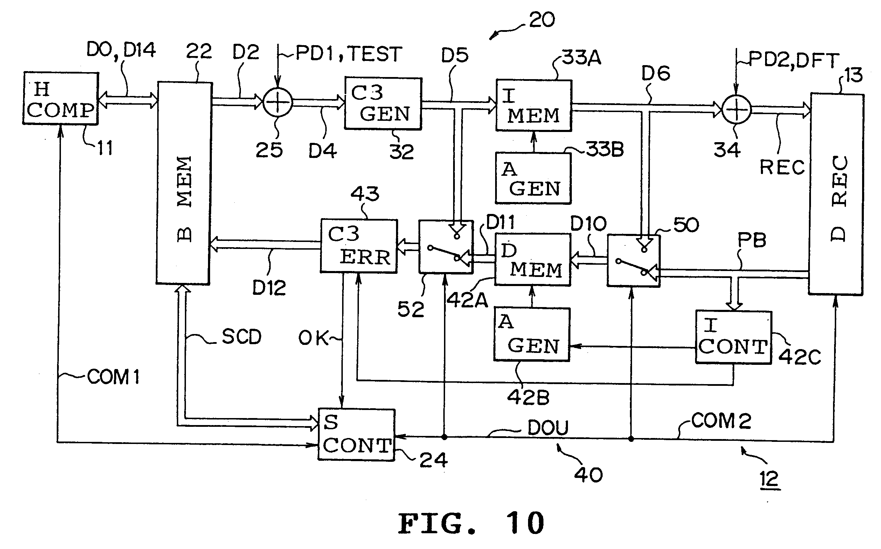

As depicted in Fig. 10, the interleave memory circuit 33A is formed with storage domains T1 - T4 capable of storing the recording track data D5 for 4 recording tracks. The recording track data D5 are stored in the respective storage domains T1 - T4 on the unit of the data blocks TF0 - TF351 in the sequence indicated by arrows such as: W(0), W(1), ..., W(M), W(M + 1), ..., W(2M), W(2M + 1), ..., W(3M), W(3M + 1), ..., W(4M-1).

Furthermore, the interleave memory circuit 33A outputs, as indicated by arrows R(0), R(1), ..., R(N-1), the recording track data D5 accumulated by replacing the order with that in the writing process. The recording track data D5 for 4 recording tracks are thereby interleave-processed.

The multiplexer 34 adds, as explained above referring to Fig. 4, the second supplement data PD2 and the synchronous code data to the second recording track data D6 (consisting of the interleave-processed recording track data D5) outputted from the interleave memory circuit 33A.

The multiplexer 34 thereby converts the second recording track data D6 into 36,108-[BYTE] unit recording data REC corresponding to a user data quantity for one recording track in the D-1 format and thereafter sequentially outputs the data REC to the data recorder 13.

The data recorder 13 is thereby capable of interleave-processing and recording the write data D0 with the C3-codes on the 4-recording-track unit. At this time, the interleave process is performed within the recording tracks on the side of the data recorder 13. Recording is effected with C1-codes and C2-codes, thereby remarkably improving the bit error rate.

Further at this moment, in accordance with this embodiment, the system control circuit 24 controls the operation of the data recorder 13 and records the data on the 4-recording-track unit.

More specifically, even if the write data WR transmitted simultaneously when issuing a write request from the host computer 11 does not reach the data quantity on the 1-recording-track unit, the recording data REC for 4 recording tracks are generated by adding the first supplement data PD1. The data recorder 13 is then driven corresponding to the 4 recording tracks.

Further, when the write data WR has a data quantity on the unit of 4 or more recording tracks, the recording data REC are generated to obtain an integer multiple of the data quantity for 4 recording tracks by adding the first supplement data PD1. The data recorder 13 is driven corresponding thereto.

Namely, no matter how small the data quantity of the write data WR may be, the system control circuit 24 drives the data recorder 13 for 4 recording tracks in response to one write request (hereinafter referred to as a control unit). The write data WR is interleave-processed on the 4-recording-track unit corresponding to the control unit.

In accordance with this embodiment, a futility of the magnetic tape 1 is thereby prevented beforehand, and the write data WR can be recorded with a high density.

Namely, when increasing the recording track unit in which the interleave process is effected, and if a drop-out takes place correspondingly, it is possible to effectively avoid a concentration of errors on one place and to improve the bit error rate.

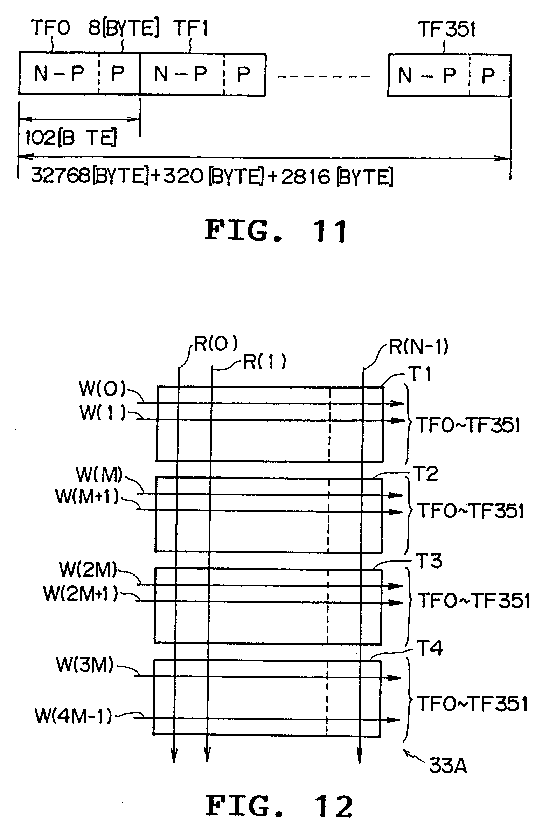

Hence, as illustrated in Fig. 11, even when driving the data recorder for only 4 recording tracks corresponding to, e.g., one control unit, and if the interleave process is performed on a 8-recording-track unit, the bit error rate can be ameliorated, correspondingly.

In this case, however, because of a read-after-write, if an error is detected in an N-th 1 recording track, the data for N-th 8 recording tracks are required to be recorded.

As shown in Fig. 12, however, when driving the data recorder for 4 recording tracks corresponding to one control unit as done in this embodiment, the interleave process is executed on the 40 recording-track unit. With this process, even if the error is detected in, e.g., the N-th 1 recording track, the rewrite can be made simply by recording the 4-recording-track data. A futile consumption of the magnetic tape 1 is effectively avoided, correspondingly. The data can be recorded at a high efficiency.

Further, as a matter of fact, when the intra-recording-track interleave process is effected on the 4-recording-track unit by marking the data with the codes C1 - C3, it was confirmable that a bit error rate of $10^{15}$ sufficient for utilization can be secured, and the data can be surely recorded with a high density correspondingly.

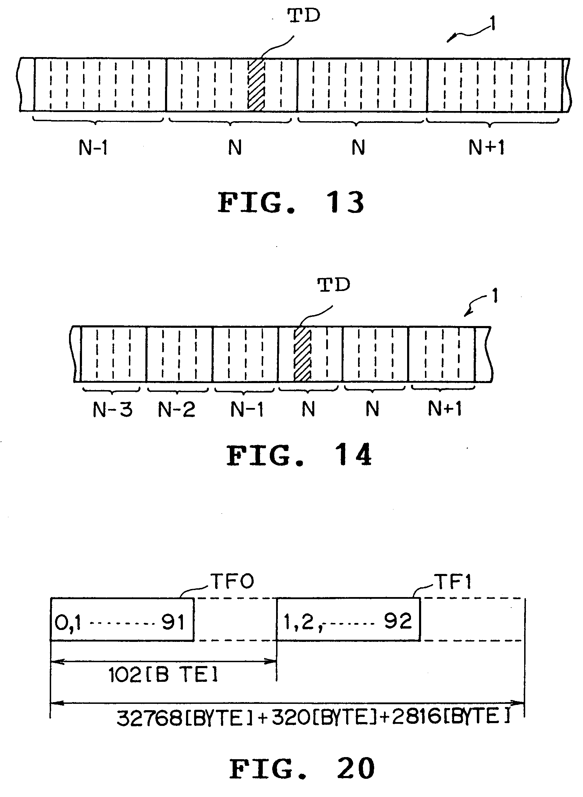

As illustrated in Fig. 13, in accordance with this embodiment, C3-code generation circuits 32A - 32D and interleave memory circuits 33AA - 33AD each assuming the same configuration are prepared for 4 channels in the C3-code generation circuit 32 and the interleave memory circuit 33A. The 32-bit data can be thereby processed as 4-channel 8-bit parallel data.

To be more specific, as shown in Fig. 14, the record format control part 20 sections the 32-bit continuous write data WR (Fig. 14A) on 8-bit units 00, 01, 02, ..., thereby generating 4-channel 8-bit parallel buffer data D4 (D4A - D4D) (Figs. 14B(1) - 14B(4)).

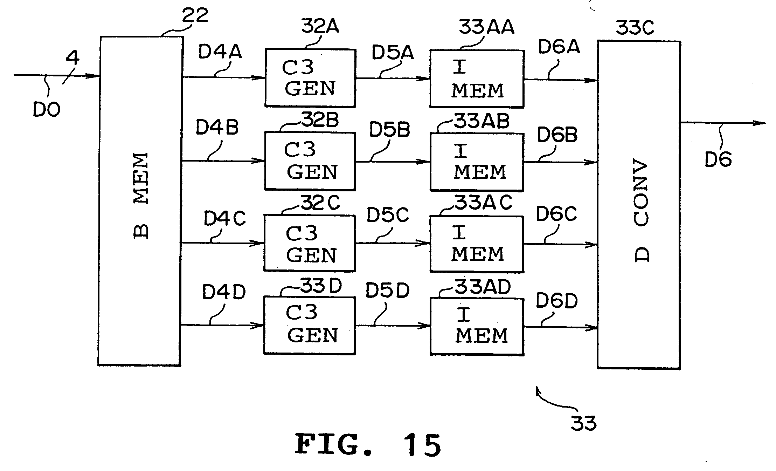

As depicted in Fig. 15, the C3-code generation circuits 32A - 32D generate 8-[BYTE] C3 codes (-(P0 - P28, P32 - P60, ...), (P1 - P29, P33 - P66, ...), (P2 - P30, P34 - P62, ...), (P3 - P31, P35 - P63, ...)) for every 102 [BYTE] ((00 - 372, 376 - 748, 752 - 1122, ...), (01 - 373, 377 - 749, ...), (02 - 374, 378 - 750, ...), (03 - 375, 379 - 751, ...) (Fig. 15C(1) - 15C(4)).

The C3-code generation circuits 32A - 32D thereby generate the Reed-Solomon codes each having a code length of 102 [BYTE] and a parity number of 8 [BYTE] with respect to the buffer data D4A - D4D for the respective channels. These circuits thereafter output them as recording track data D5 (D5A - D5D) to the interleave memory circuits 33AA - 33AD.

The interleave memory circuits 33AA - 33AD, as described with reference to Fig. 10, sequentially accumulate the recording track data D5A - D5D for each of the data blocks TF0 - TF351. Thereafter, the recording track data D5A - D5D for 4 recording tracks are, when being accumulated, outputted by replacing the order with that in the writing process.

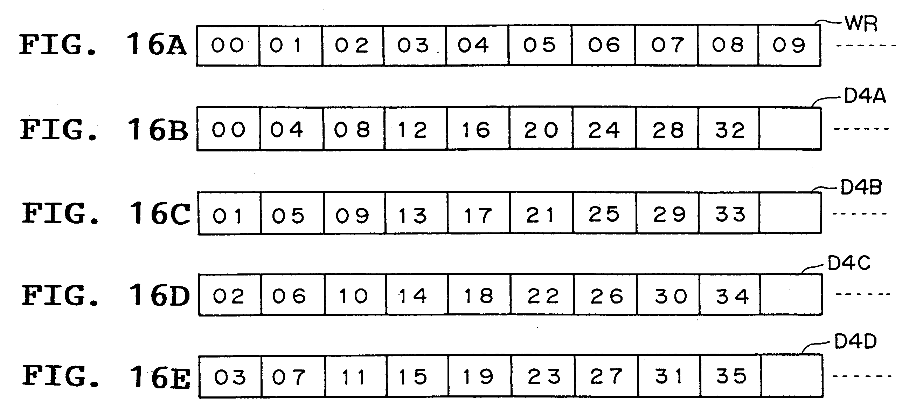

At this moment, in the interleave memory circuit 33AA, the recording track data D5A are accumulated on the units of the data blocks TF0 - TF351 in the order such as: 00, 04, 08, ..., 372, P0, 04, ..., P28, 376, 380, ..., 748, P32, P36, ..., P60, 752, ..., 1122, P64, .... Simultaneously, the data are outputted in the order orthogonal to the writing order, such as: 00, 376, 752, ..., NN, 04, 380, 756, ..., NN + 4, 08, ..., NH + 8, .... The recording track data D5A for one recording track is outputted after being interleave-processed (Figs. 15A and 16A).

Similarly, in the interleave memory circuit 33AB, the recording track data D5B inputted on the units of the data blocks TF0 - TF351 are accumulated in the order such as: 01, 05, 09, ..., 373, P1, 05, ..., P29, 377, 381, ..., 749, P33, P37, ..., P61, 753, ..., 1123, P65, .... Simultaneously, the data are outputted in the order orthogonal to the writing order, such as: 01, 377, 753, ..., NH + 1, 05, 381, 757, ..., NH + 5, 09, ..., NN + 9, .... The recording track data D5B for one recording track is thereby outputted after being interleave-processed (Figs. 15B and 16B).

In the interleave memory circuits 33AC and 33AD, the recording track data D5C and D5D inputted on the units of the data blocks TF0 - TF351 are likewise accumulated and simultaneously outputted in the order orthogonal to the writing order. The recording track data D5C and D5D for one recording track are outputted after being interleave-processed (Figs. 15C, 15D, 16C and 16D).

With this process, in the interleave memory circuit 33A, the recording track data D5 (D5A - D5D) are interleave-processed for every channel.

A data converting circuit 33C consists of a selection circuit for sequentially switching contact points, whereby 4-channel recording track data D6A - D6D outputted from the interleave memory circuits 33AA - 33AD are converted into to 8-bit continuous 1-channel recording track data D6 (Fig. 16E).

The interleave memory circuit 33 thereby sequentially converts the 4-channel-parallel-processed write data WR into the recording data REC which are to be recorded.

Hence, in the interleave memory circuit 33, an operating velocity can be reduced corresponding to an amount of 4-channel parallel processing. Data processing can be surely done, and at the same time the electric power consumed can be also reduced.

Further, because of 4-channel parallel processing, the entire construction can be simplified, correspondingly.

Namely, when directly interleave-processing the 32-bit data on the 4-recording-track unit, a memory circuit for accumulating the 4-recording-track data is needed on the input side of the C3-code generation circuit 32.

When effecting 4-channel parallel processing as done in this embodiment, however, processing can be performed simply by 4-channel-dividing the data inputted sequentially. The construction on the input side of the C3-code generation circuit 32 is simplified correspondingly. This in turn can simplify the entire construction.

The system control circuit 24 outputs predetermined identification data DFT to the multiplexer 34. The identification data DFT is thereby recorded together with the second supplement data PD2 on the magnetic tape 1.

The data recorder control device 12 thereby changes over the deinterleave process and the error correction process on the basis of the identification data DFT during reproduction. If the magnetic tape is a tape on which recording is effected in the D-1 format, reproducing is attainable even when the interleave process and the C3-code generating process are done in a format different from that of the data recorder control device 12.

Namely, because of the D-1 format being a standardized format, the compatibility can be assured even when being recorded by a different data recorder 13.

As in this embodiment, however, when the preprocessed data is recorded by the data recorder 13, the compatibility can not be assured.

For this reason, in the system control circuit 24, the interleave information and the error correction information are recorded as the identification data DFT.

Allocated herein to the interleave information are the recording track unit (4 recording tracks in this case) of the interleave process, the processed data lengths (vertical and crosswise data lengths in Fig. 10) and other information on write/read processes of the interleave memory circuit 33A.

Further, a code length of the Reed-Solomon code, a parity number (Fig. 9), etc. are allocated to the error correction information.

With this allocation, in the data recorder control device 12, the deinterleave process and the error correction process are switched on the basis of the identification data DFT. It is therefore possible to perform reproducing from the magnetic tape on which recording is effected in a different format.

Further, at this moment, in accordance with this embodiment, the identification data DFT are recorded in the recording area of the second supplement data PD2 which are not subjected to the C3-code and interleave processes. The identification data DFT is thereby detectable simply by taking in the reproduced data PB at a predetermined timing. The processing format is switched quickly corresponding thereto, and the reproduced data PB inputted subsequently can be surely processed.

Namely, in the interleave control circuit 42C, the reproduced data PB outputted from the data recorder 13 is taken in at a predetermined timing, thus detecting the identification data DFT. Based on the detected result, the control data are outputted to the address generation circuit 42B and the C3 error correction circuit.

The deinterleave memory circuit 42A has the same construction with the interleave memory circuit 33A and sequentially processes the reproduced data PB on the basis of the write/read addresses generated by the address generation circuit 42B.

At this time, the deinterleave memory circuit 42A converts, when inputting the reproduced data PB through a selection circuit 50, the 8-bit continuous reproduced data PB into 4-channel 8-bit parallel data in the same way with the recording process and then takes in the data.

With this process, in accordance with this embodiment, the reproduced data PB are parallel-processed together with the C3 error correction circuit 43. The operating velocities of the deinterleave circuit 42 and the C3 error correction circuit 43 are thereby decreased, and, in combination therewith, the construction of the data recorder control device 12 can be simplified.

The address generating circuit 42B changes over, when generating the write/read addresses, the operation on the basis of the control data outputted from the interleave control circuit 42C. The deinterleave process of the deinterleave memory circuit 42A is thus changed over in conformity with the format determined by the identification data DFT.

With this process, in the data recorder control device 12, the reproduced data PB are deinterleave-processed with respect to the magnetic tape undergoing the record in a different interleave processing format.

The C3-code correction circuit 43 consisting a 4-channel code correction circuit switches the operation on the basis of the control data outputted from the interleave control circuit 42C. The error-corrected reproduced data D12 is outputted to the buffer memory circuit 22.

With this process, in the data recorder control device 12, even when being preprocessed in a different format, the reproduced data PB outputted from the data recorder 13 can be surely reproduced. The usability can be improved correspondingly by expanding an application field of the data recorder control device 12.

The buffer memory 22 herein has a 9-[MBYTE] recording capacity remarkably larger than the data quantity of each recording track, whereby the reproduced data D12 are sequentially taken in to selectively output only desired data.

At this time, the buffer memory 22 selectively accumulates only the desired data on the basis of the subcode SCD, whereby the buffer memory 22 can be employed at a high efficiency.

For this reason, in accordance with this embodiment, the data is recorded with the subcode SCD during recording, wherein the data quantity corresponding to each recording track serves as one unit.

Namely, in the system control circuit 24, attributes to the write data WR inputted sequentially are detected based on the output data of the host computer 11 during recording. The subcode data SCD is generated for every attribute.

Further, the system control circuit 24 outputs the generated subcode data SCD to the buffer memory 22. As described above referring to Fig. 3, the 320-[BYTE] subcode data SCD is thereby added for every 36,108 [BYTE] corresponding to the data quantity of one recording track.

Therefore, the subcode data SCD is, after the C3 codes have been generated together with the input data D0, interleave-processed on the 4-recording-track unit and thereafter recorded on the magnetic tape 1.

In contrast with this, during reproducing, the buffer memory 22 sequentially takes in the reproduced data D12 outputted from the C3 error correction circuit 43.

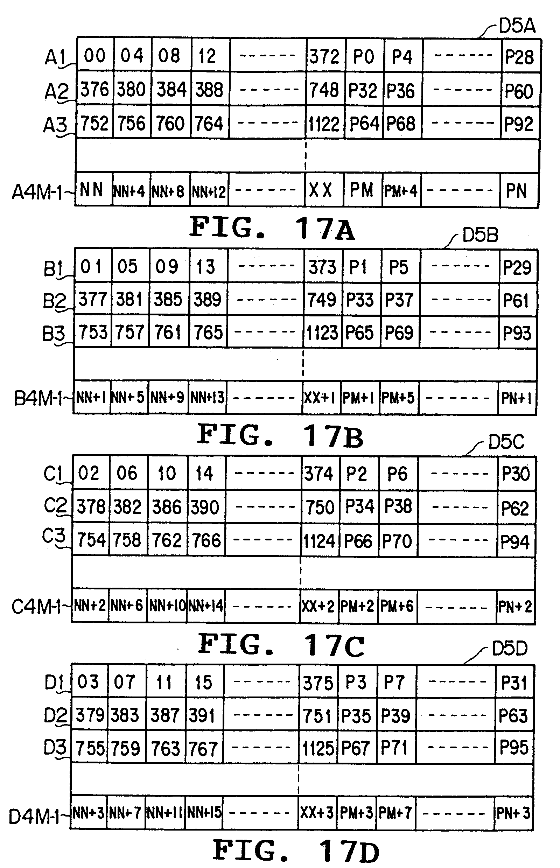

At this moment, as illustrated in Fig. 17, the buffer memory 22 outputs, after taking in the reproduced data D12 for every subcode data SCD, the, subcode data SCD thus taken in to the system control circuit 24.

The system control circuit 24 judges whether or not the data receives a read request from the host computer 11 on the basis of the subcode data SCD.

The system control circuit 24 thereby rejudges whether the data is necessary or not after temporarily taking the reproduced data D12 together with the subcode data SCD into the buffer memory 22.

If the necessary and unnecessary data are in mixture reproduced herein in this manner, there is a method of selectively taking in only the necessary data beforehand.

When selectively taking in only the necessary or not has to be judged for an extremely short period till the reproduced data is outputted. The construction of the control circuit becomes inevitably complicated, correspondingly.

As in this embodiment, however, whether the data are necessary or not rejudged after taking the data into the buffer memory 22. The judgment can be made taking a sufficient time during a period for which the subsequent reproduced data D12 is being inputted. The construction of the system control circuit 24 can be simplified, correspondingly.

The system control circuit 24 herein outputs the recording area of the corresponding subcode data SCD to the buffer memory 22 with respect to the reproduced data (subcodes B, X are composed of subcodes of the unnecessary data in this case) which are not required to be outputted to the host computer 11.

Corresponding to this operation, the buffer memory 22 overwrite-records the subsequently inputted reproduced data D12 in the area concerned, with the result that the only the necessary data are selectively accumulated by effectively making use of the capacity of the buffer memory 22.

Besides, the buffer memory 22 transmits, when a predetermined amount of, e.g., the reproduced data D12 are reproduced, the reproduced data accumulated in response to the transmission request of the host computer 11.

Thus, only the desired reproduced data can be outputted surely with a simple construction.

The system control circuit 24 is, when a self-diagnosis command is inputted from the host computer 11, changed over to the self-diagnosis mode and self-diagnoses the operation of the data recorder control device 12.

Namely, the system control circuit 24 outputs the control signal to the multiplexer 25 and also outputs predetermined test data TEST in place of the second buffer data D2 to the C3-code generation circuit 32.

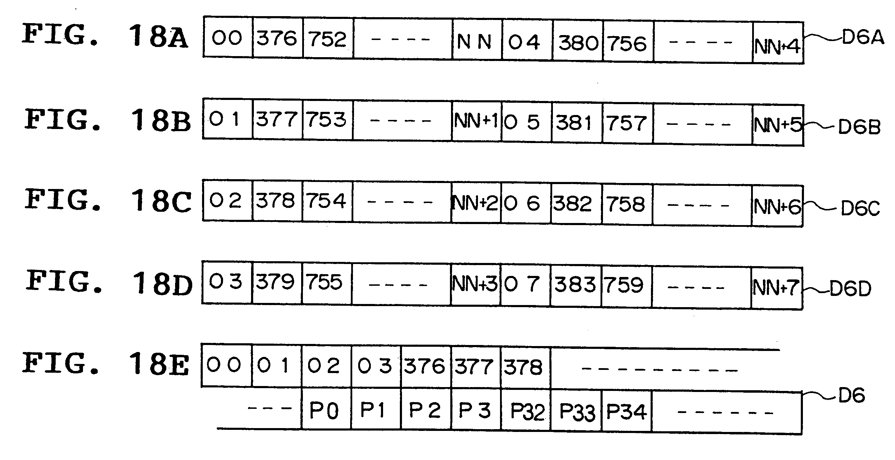

The test data TEST are herein generated by a data generation circuit constructed of a read-only-memory circuit. Values thereof are, as illustrated in Fig. 18, sequentially increased within the respective data blocks TF0 - TF351. Further, head numerical data are so generated as to sequentially increase in the respective data blocks TF - TF351. The C3-code is thereby added to the test data TEST through the C3-code generation circuit 32, and the recording track data D5 is then generated.

The system control circuit 24 herein initially outputs the control signal to the selection circuit 52 and inputs the recording track data D5 directly to the C3 error correction circuit 43.

The C3 error correction circuit 43 thereby error-corrects the recording track data D5 on the basis of the C3-code and outputs, when detecting the error, a detection signal OK thereof to the system control circuit 24.

In the data recorder control device 12 herein, the recording track data D5 outputted from the C3-code generation circuit 32 is inputted directly to the C3 error correction circuit 43. If the C3-code generation circuit 32 or the C3 error correction circuit 43 normally functions, no bit error is caused. Whereas if a fault can be seen in either the C3-code generation circuit 32 or the C3 error correction circuit 43, the detection signal OK rises.

In the data recorder control device 12, the self-diagnosis can be thereby easily effected based on the result of error detection of the C3 error correction circuit 43.

As a matter of fact, in the conventional data recorder or the like, as illustrated in Fig. 19, the self-diagnosis is performed by use of a dedicated seld-diagnosis circuit 56. The test data is generated by a data generation circuit 58 of the self-diagnosis circuit 56.

Further, in the self-diagnosis circuit 56, the test data is inputted to a data comparator 59 via the C3-code generation circuit 32 and the C3 error correction circuit 43. Obtained herein is a result of comparison with the test data inputted via a delay circuit 60. A self-diagnosis result SOK is acquired based on this comparative result.

Hence, according to this embodiment, the self-diagnostic result can be obtained without providing the dedicated self-diagnosis circuit 56. The whole construction can be more simplified correspondingly than in the prior art.

When the self-diagnostic results of the C3-code generation circuit 32 and the C3 error correction circuit 43 are thus acquired, the system control circuit 24 switches the contact points of the selection circuits 50, 52. The operation moves to the self-diagnosis of the interleave circuit 33 and the deinterleave circuit 42.

The system control circuit 24 herein inputs, after converting the recording track data D5 into recording track data D6 through the interleave memory circuit 33A, this recording track data D6 directly to deinterleave memory circuit 42A.

The system control circuit 24 is thereby capable of confirming the operations of the interleave circuit 33 and of the deinterleave circuit 42 on the basis of the detection signal OK. The self-diagnosis function is thus obtainable with a simple construction.

An eject command of a tape cassette is given from the host computer 11 upon completions of all the records and reproducing processes, the system control circuit 24 ejects the tape cassette by executing the processing procedures shown in Fig. 20.

Namely, the system control circuit 24 moves from step SP1 to step SP2. When an eject command COM1 of the tape cassette is herein inputted from the host computer 11, the operation moves to step SP3.

The system control circuit 24 herein transmits a rewind command COM2 to the data recorder 13 and thereafter moves to step SP4. The circuit 24 judges whether or not the magnetic tape 1 is rewound within a range (Fig. 2) from the physical top end PBOT to the logical top end LBOT on the basis of response data DOU sent back from the data recorder 13.

If a negative result is obtained therein, the system control circuit 24 moves to step SP5 and waits for a predetermined period therein. The circuit 24 thus waits for the rewinding operation of the data recorder 13 and, after a predetermined period has elapsed, moves to step SP4.

The system control circuit 24 thereby rewinds the magnetic tape 1. When the magnetic tape 1 is rewound within the range from the physical top end PBOT to the logical top end LBOT, the circuit 24 moves to step SP6 because of having obtained a negative result in step SP4.

The system control circuit 24 herein outputs the unload control data COM2 to the data recorder 13 and, upon an input of the unload completion response data DOU from the data recorder 13, moves to step SP8.

The system control circuit 24 herein moves to step SP8 after outputting the tape cassette eject command COM2 to the data recorder 13, thus finishing the processing procedures.

With this operation, in the data recorder control device 12, loading and unloading of the magnetic tape 1 are executed in the head area of the magnetic tape 1 used for data recording.

More specifically, in this type of magnetic recording/reproducing device, when the magnetic tape 1 is loaded or unloaded, a large load is applied on the magnetic tape 1. The largest load is applied especially when a capstan depresses the magnetic tape 1.

Such a load does not present a serious problem in the video tape recorder or the like. Whereas in this type of data recorder 13, the foregoing load conduces to a decline of the bit error rate.

Hence, in accordance with this embodiment, the tape cassette is ejected after rewinding the magnetic tape 1 up to the top end part thereof, whereby loading and unloading are effected invariably at the top end part of the magnetic tape 1. This arrangement effectively avoids the decline of the bit error rate.

Based on the construction discussed above, the input data and the C3-code are interleave-processed and recorded between the 4 recording tracks TR formed corresponding to one control unit. The futility of the magnetic tape which is caused due to rewrite can be therefore reduced, and it is possible to remarkably improve the bit error rate by using the magnetic tape at the high efficiency, corresponding.

As above described construction, the input data sequentially inputted is converted into the four channels input data, and after to be added the C3 code at every channels, the data as converted are interleave processed so as to converted into one channel record data. thereby it comes to simply the whole construction and be able to improve a bit error rate.

As above described construction, a testing result is obtained with regard to the operation of the C3 code generation circuit 32 and the C3 error correction circuit 43 on the basis of the error detecting result of the C3 error correction circuit 43. Thereby a self diagnosis is executed by means of a simple construction.

As above described construction, the input data is recorded with adding the subcode data representative of the property of the input data at every predetermined units, and the reproduction data is sequentially storaged in reproducing. The unnecessary reproduction storaged data is re-written by the subsequent inputted reproduction data on the basis of the subcode data to be able to accurately store only desired data by means of simple construction.

As above described construction, the identification data DFT representative of the interleave processing etc. is recorded together with the input data, and in reproducing, the format using for deinterleave processing is exchanged on the basis of identification data DFT to be able to improve a compatibility of a magnetic tape and be able to more improve the easy usage of the computer system.

As above described construction, using regions are assigned to the head portion and tail portion of the magnetic tape, and the unloading operation of the magnetic tape is executed. Thereby the load of the magnetic tape in the recording region is reduced so as to be able to more improve a bit error rate.

Note that the embodiment discussed above has dealt with a case where interleave processing and recording are performed between the 4 recording tracks YR formed corresponding to one control unit. The present invention is not, however, limited to this arrangement but applicable widely to cases where a plurality of recording tracks are formed corresponding to one control unit.

Furthermore, the embodiment discussed above has dealt with a case where the present invention is applied to the D-1 formatted data recorder. The present invention is not, however, limited to this recorder but applicable widely to magnetic recording/reproducing devices for recording various data.

As described above, according to the present invention, the input data and the error detecting/correcting code are interleave-processed and recorded between the plurality of recording tracks formed corresponding to one control unit, and correspondingly the bit error rate thereby shows a remarkable improvement as compared with the prior art.

Further, at this time, interleave processing is effected between the plurality of recording tracks corresponding to one control unit, thereby reducing the futility of the magnetic tape which is caused due to rewrite. It is therefore feasible to obtain the magnetic recording/reproducing device capable of recording the desired data at a high efficiency, correspondingly.

According to the present invention, an input data sequentially inputted is converted into plural channels input data having predetermined bit length, and then the data as converted is interleave processed with adding an error detection/correction code at every channels so as to be converted into one channel record data. Thereby it is realized to obtain a data recording and/or reproducing apparatus in which the construction as whole is simple and the error bit rate is more improved.

According to the present invention, on the basis of the result of an error detecting of the error detection/correction means, the testing result is obtained with regard to the operation of the encoder and the error detection/correction. Thereby it is realized to obtain a data recording and/or reproducing apparatus in which the construction as whole is simple and the error bit rate is more improved.

According to the present invention, the input data is recorded with adding predetermined identification data at every predetermined units. In reproducing, the reproduction data is sequentially stored, and the unnecessary storage reproduction data is re-written by the subsequent inputted reproduction data on the basis of the identification data. Thereby it is realized to obtain a data recording and/or reproducing apparatus in which only the desired data is able to be reproduced by means of simple construction.

According to the present invention, the format using for interleave processing is recorded together with the input data. In reproducing, the format using for interleave processing is exchanged with correspondence to the format. Thereby it is realized to obtain a data recording and/or reproducing apparatus in which there is more improved a compatibility of a tape recording medium and then the easy usage of the computer system.

According to the present invention, the tape recording medium is loaded or unloaded within the unusing region of the head portion and the tail portion of the tape recording medium. Thereby it is realized to obtain a data recording and/or reproducing apparatus in which the load of the recording regions is reduced an the bit error rate is able to be more improved.

While there has been described in connection with the preferred embodiments of the invention, it will be obvious to those skilled in the art that various changes and modifications may be made therein without departing from the invention, and it is aimed, therefore, to cover in the appended claims all such changes and modifications as fall within the true spirit and scope of the invention.

## Claims

1. A recording device for recording desired input data (WR) by forming recording tracks (TR) obliquely in the longitudinal direction of a magnetic tape (1) on the basis of control signals outputted from a predetermined control unit (11), wherein:

    error detecting/correcting codes (C3) are added to said input data (D4) inputted sequentially on a predetermined unit;

    a plurality of recording tracks (TR) are formed on said magnetic tape (1) on one control unit for said control signals in response to said control signals; and

    said input data (D4) and said error detecting/correcting codes (C3) are interleave-processed between said plurality of recording tracks (TR) corresponding to said one control unit, so that said interleave-processed input data (D4) and error detecting/correcting codes (C3) are recorded in said plurality of recording tracks (TR).

2. A data recording apparatus for recording predetermined input data (WR) on recording tracks (TR) by forming the recording tracks (TR) obliquely on a tape (1) recording medium comprising:

    converting means (22) for converting input data sequentially input into input data (D4A, D4B, D4C, D4D) of a plurality of channels having a predetermined bit length;

    a plurality of coders (32A, 32B,...) for adding an error detection/correction code (C3) to said input data at every plural channels;

    a plurality of interleave processing means (33AA, 33AB,...) for interleave-processing said input data and said error detection/correction code (C3) at every said plural channels;

    data conversion means (33C) for converting said input data and said error detection/correction code of a plurality of channels interleave-processed into record data (D6) of one channel by means of said plural interleave-processing means (33AA, 33AB,...) by sequentially outputting the output data of said plural interleave-processing means (33AA, 33AB,... );

    tape recording means (1) for recording said record data on said tape recording medium.

3. A data recording apparatus for recording predetermined input data (D4) on recording tracks (TR) by forming recording tracks (TR) obliquely on a tape (1) recording medium comprising:

    a coder (32) for adding an error detection/correction code (C3) to said input data (D4); and

    error detection/correction means (43) for executing error detection/correction processing of said input data on the basis of said error detection/correction code (C3):

    wherein in self-diagnosing mode, predetermined test data (TEST) is supplied to said coder (32) instead of said input data (D4), and a test result is obtained regarding an operation of said coder (32) and/or said error detection/correction means (43).

4. A data recording apparatus for recording predetermined input data (D4) on recording tracks (TR) by forming recording tracks (TR) obliquely on a tape (1) recording medium comprising:

recording means for recording input data with adding identification data (D12) representative of a property of said input data (D4) at predetermined unit on said tape (1) recording medium;

reproducing means for reproducing said input data (D4) and identification data (D12) recorded on said tape (1) recording medium and outputting reproduction data;

memory means (22) for sequentially storaging said reproduction data, selecting the region stored which said reproduction data on the basis of said identification data (D12) of the stored reproduction data, and storing said reproduction data subsequently inputted to said selected region, thereby rewriting unnecessary reproduction data within said reproduction data stored with subsequent input reproduction data (D4) so as to store only said reproduction data to be added to predetermined identification data.

5. A data recording apparatus for recording predetermined input data (D4) on recording tracks (TR) by forming recording tracks (TR) obliquely on a tape (1) recording medium comprising:

preprocessing means for interleave-processing input data to be sequentially inputted with using first format, and then outputting said input data (D4) as interleave-processed with adding identification data (D12);

recording means for adding error detection/correction code (C3) at predetermined unit to said output data (D4) of said preprocessing means, interleave-processing said data as adding processed with using second format, and then sequentially recording said data as interleave-processed;

reproducing means for obtaining reproduction data from said tape recording medium, deinterleave-processing said reproduction data with using second format, and outputting said data as deinterleave-processes with error correction processing; and

afterprocessing means for detecting said identification data from output data of said reproduction means, deinterleave processing output data of said reproduction means, and outputting said data as deinterleaved.

6. A data recording and/or reproducing apparatus in which a tape (1) recording medium charged in a predetermined tape cassette is wound on a drum, recording tracks (TR) are sequentially formed obliquely on said tape (1) recording medium, and a predetermined input data (D4) are recorded on said recording track (TR) and/or reproduced said input data (D4) as recorded on said tecording track (TR), wherein:

a region other than a predetermined region of the head portion and the tail portion of the tape (1) recording medium is assigned as a recording region for recording said input data (D4); and

when said recording or reproducing operation is ended, said tape (1) recording medium is run to said region of said head portion or said tail portion, and then said tape cassette is ejected after unloading operation.

7. The data recording and/or reproducing means according to one of claims 1 to 6, said tape recording medium is a magnetic tape (1) on which recording tracks (TR) are formed obliquely by means of rotary magnetic heads.

---TR1  TR2 TR3 TR4---TR1---TR2    TA

1

CTL

TC

4 TRACKS

## FIG. 1 (PRIOR ART)

FIG. 2 (PRIOR ART)

EP 0 504 779 A2

10

H COMP

WR

HI CONT

REC

F CONT

D REC

RD

14

15

PB

13

11

C TBL

MEM

17

16

12

FIG. 3

1

10[m]

15[m]

PBOT

LBOT

AREC

LEOT

PEOT

FIG. 4A

5[m]

10[m]

NEOT

FIG. 4B

DITA  NRA      UDA                          VEOVA

18

TR

204[BYTE]  36,108[BYTE]  2,816[BYTE]

320[BYTE]  32,768[BYTE]

**FIG. 5A**

PD2    SCD    DATA    X[BYTE]    C3

94[BYTE]    102[BYTE]    8[BYTE]

**FIG. 5B**

SCD, DATA, PD1    C3

204[BYTE]    36,108[BYTE]

| | | |
|---|---|---|
| TR1 | PD2 | SCDX4 |
| TR2 | PD2 | DATAX4 |
| TR3 | PD2 | PD1X4 |
| TR4 | PD2 | C3X4 |

**FIG. 6**

FIG. 7

FIG. 8

EP 0 504 779 A2

40

FIG. 9

FIG. 10

EP 0 504 779 A2

TF0   8[BYTE]  TF1                          TF 351

| N – P | P | N – P | P | - - - - - - | N – P | P |

102[B TE]

32768[BYTE]+320 [BYTE]+2816 [BYTE]

## FIG. 11

R(O)                    R(N-1)
   R(1)                    T1
W(O)                         TF0~TF351
W(1)

W(M)                         T2
W(M+1)                       TF0~TF351

W(2M)                        T3
W(2M+1)                      TF0~TF351

W(3M)                        T4
W(4M-1)                      TF0~TF351
                             33A

## FIG. 12

TD

1

N-1　　　　N　　　　N　　　　N+1

# FIG. 13

TD

1

N-3　　N-2　　N-1　　N　　　N　　　N+1

# FIG. 14

TF0　　　　　　　　　　　　TF1

| 0,1 ------- 91 | | 1,2, ------ 92 | |

102[B TE]

32768[BYTE]+320[BYTE]+2816[BYTE]

# FIG. 20

EP 0 504 779 A2

4
DO

22
B MEM

D4A 32A
C3 GEN
D5A 33AA
I MEM
D6A 33C
D CONV
D6

D4B 32B
C3 GEN
D5B 33AB
I MEM
D6B

D4C 32C
C3 GEN
D5C 33AC
I MEM
D6C

D4D 33D
C3 GEN
D5D 33AD
I MEM
D6D

33

**FIG. 15**

FIG. 16A | 00 | 01 | 02 | 03 | 04 | 05 | 06 | 07 | 08 | 09 | — WR ------

FIG. 16B | 00 | 04 | 08 | 12 | 16 | 20 | 24 | 28 | 32 | | — D4A ------

FIG. 16C | 01 | 05 | 09 | 13 | 17 | 21 | 25 | 29 | 33 | | — D4B ------

FIG. 16D | 02 | 06 | 10 | 14 | 18 | 22 | 26 | 30 | 34 | | — D4C ------

FIG. 16E | 03 | 07 | 11 | 15 | 19 | 23 | 27 | 31 | 35 | | — D4D ------

EP 0 504 779 A2

D5A

| A1 | 00 | 04 | 08 | 12 | ------ | 372 | P0 | P4 | ------ | P28 |
|---|---|---|---|---|---|---|---|---|---|---|
| A2 | 376 | 380 | 384 | 388 | ------ | 748 | P32 | P36 | ------ | P60 |
| A3 | 752 | 756 | 760 | 764 | ------ | 1122 | P64 | P68 | ------ | P92 |
|  |  |  |  |  |  |  |  |  |  |  |
| A4M-1 | NN | NN+4 | NN+8 | NN+12 | ------ | XX | PM | PM+4 | ------ | PN |

## FIG. 17A

D5B

| B1 | 01 | 05 | 09 | 13 | ------ | 373 | P1 | P5 | ------ | P29 |
|---|---|---|---|---|---|---|---|---|---|---|
| B2 | 377 | 381 | 385 | 389 | ------ | 749 | P33 | P37 | ------ | P61 |
| B3 | 753 | 757 | 761 | 765 | ------ | 1123 | P65 | P69 | ------ | P93 |
|  |  |  |  |  |  |  |  |  |  |  |
| B4M-1 | NN+1 | NN+5 | NN+9 | NN+13 | ------ | XX+1 | PM+1 | PM+5 | ------ | PN+1 |

## FIG. 17B

D5C

| C1 | 02 | 06 | 10 | 14 | ------ | 374 | P2 | P6 | ------ | P30 |
|---|---|---|---|---|---|---|---|---|---|---|
| C2 | 378 | 382 | 386 | 390 | ------ | 750 | P34 | P38 | ------ | P62 |
| C3 | 754 | 758 | 762 | 766 | ------ | 1124 | P66 | P70 | ------ | P94 |
|  |  |  |  |  |  |  |  |  |  |  |
| C4M-1 | NN+2 | NN+6 | NN+10 | NN+14 | ------ | XX+2 | PM+2 | PM+6 | ------ | PN+2 |

## FIG. 17C

D5D

| D1 | 03 | 07 | 11 | 15 | ------ | 375 | P3 | P7 | ------ | P31 |
|---|---|---|---|---|---|---|---|---|---|---|
| D2 | 379 | 383 | 387 | 391 | ------ | 751 | P35 | P39 | ------ | P63 |
| D3 | 755 | 759 | 763 | 767 | ------ | 1125 | P67 | P71 | ------ | P95 |
|  |  |  |  |  |  |  |  |  |  |  |
| D4M-1 | NN+3 | NN+7 | NN+11 | NN+15 | ------ | XX+3 | PM+3 | PM+7 | ------ | PN+3 |

## FIG. 17D

EP 0 504 779 A2

**FIG. 18A**

| 00 | 376 | 752 | - - - - | N N | 04 | 380 | 756 | - - - - | NN+4 |

— D6A

**FIG. 18B**

| 01 | 377 | 753 | - - - - | NN+1 | 05 | 381 | 757 | - - - - | NN+5 |

— D6B

**FIG. 18C**

| 02 | 378 | 754 | - - - - | NN+2 | 06 | 382 | 758 | - - - - | NN+6 |

— D6C

**FIG. 18D**

| 03 | 379 | 755 | - - - - | NN+3 | 07 | 383 | 759 | - - - - | NN+7 |

— D6D

**FIG. 18E**

| 00 | 01 | 02 | 03 | 376 | 377 | 378 | - - - - - - - - - - |

| - - - | P0 | P1 | P2 | P3 | P32 | P33 | P34 | - - - - - - - |

— D6

SCD

| A | BLOCK 0 |
|---|---------|
| A | BLOCK 1 |
| B | BLOCK 2 |
| X | BLOCK 3 |
| A | BLOCK 4 |
| X | BLOCK 5 |

D12

## FIG. 19

S DIAG — 56

58 — D GEN

C3 GEN — 32

60 — DLY

D COM — 59

C3 ERR — 43

SOK

## FIG. 21

START — SP1

EJECT ON — SP2

SEND UNLOAD SIGNAL — SP3

REWIND ? — SP4

YES → SEND REWIND COMMAND — SP6

NO

REWIND — SP5

EJECT CASSETTE — SP7

END — SP8

FIG. 22